# EUROPÄISCHE PATENTSCHRIFT

(11) **EP 2 205 944 B1**
(45) Veröffentlichungstag und Bekanntmachung des Hinweises auf die Patenterteilung: **28.11.2012**
(21) Anmeldenummer: 08804317.9
(22) Anmeldetag: 17.09.2008
(51) Int. Cl.: G01C 21/36

(54) **VERFAHREN UND VORRICHTUNG ZUR AUSGABE VON OPTISCHEN FAHREMPFEHLUNGEN IN EINEM FAHRZEUG**
METHOD AND DEVICE FOR THE OUTPUT OF OPTICAL DRIVING RECOMMENDATIONS IN A VEHICLE
PROCÉDÉ ET DISPOSITIF D'ÉMISSION DE RECOMMANDATIONS DE CONDUITE OPTIQUE DANS UN VÉHICULE

(30) Priorität: 08.11.2007 DE 102007053305
(43) Veröffentlichungstag der Anmeldung: 14.07.2010
(73) Patentinhaber: Robert Bosch GmbH, 70442 Stuttgart (DE)
(72) Erfinder: RAFALCZIK, Achim, 31079 Sibesse (DE)
(86) Internationale Anmeldenummer: PCT/EP2008/062366
(87) Internationale Veröffentlichungsnummer: WO 2009/059832

(56) Entgegenhaltungen:
- WO-A-2007/037126
- WO-A1-2006/132522
- DE-A1-102006 010 478
- US-B1- 6 285 317

## Beschreibung

### Technisches Gebiet

Die vorliegende Erfindung betrifft ein Verfahren zur Ausgabe von optischen Fahrempfehlungen in einem Fahrzeug, eine Vorrichtung zur Ausgabe von optischen Fahrempfehlungen in einem Fahrzeug sowie ein Kraftfahrzeug.

### Stand der Technik

Aktuelle Navigationssysteme stellen dem Benutzer eines Fahrzeugs schon heute ein dreidimensionales Bild seiner Umgebung in Fahrtrichtung zur Verfügung. In dieses Bild werden bei Bedarf optische Fahrempfehlungen, im Folgenden als OFE bezeichnet, eingeblendet. Die Darstellung der Fahrzeugumgebung ist allerdings virtuell, das heißt, sie ist ein per Rechner erzeugtes Bild, das auf mehr oder weniger komplexen digitalen Kartendaten basiert. Diese Darstellung ist für den Fahrer interpretationsbedürftig und lenkt ihn daher von der aktuellen Fahrsituation ab.

In der DE 199 41 477 A1 ist ein Fahrzeug-Navigationsgerät beschrieben, das über eine in Fahrtrichtung ausgerichtete Kamera verfügt, mit der eine aktuelle Szenerie erfasst wird. Das erfasste Bild wird mit Objekten, die in einer digitalen Kartenbasis abgespeichert sind, abgeglichen und die Darstellung der gespeicherten Objekte mit den aufgenommenen Bildern aktualisiert. Neben einer solchermaßen nachgebildeten Wirklichkeit werden auf dem Monitor des Navigationsgeräts zusätzliche künstliche Objekte, wie Hinweispfeile, eingeblendet. Allerdings weist der in der DE 199 41 477 A1 dargestellte Ansatz den Nachteil auf, dass durch das Abgleichen von in der digitalen Kartenbasis abgespeicherten Objekten mit der Darstellung in den aufgenommenen Bildern komplizierte Bilderkennungsalgorithmen erforderlich sind. Diese erfordern einerseits durch eine hohe numerische Rechenleistung eine hohe Leistungszufuhr beim Einsatz eines solchen Verfahrens und machen andererseits teuere Signalverarbeitungsschaltungen notwendig.

Weiterhin wird in der JP 2005 214 857 A ein Fahrzeugnavigationsgerät mit einer Anzeigeeinheit offenbart, auf der eine Routendarstellung angezeigt wird. Diese Routendarstellung wird auf der Basis eines aktuell fotografierten Bildes erzeugt. Bei der Routendarstellung mit einem Hinweispfeil handelt es sich um eine Überlagerung mit dem aktuell aufgenommenen Bild. Nachteilig bei diesem Ansatz ist jedoch die überdimensionale Darstellung von Hinweispfeilen auf dem Display, die bei einem flüchtigen Blick eines auf den Straßenverkehr konzentrierten Fahrers für Irritationen sorgt, da erst eine Orientierung auf dem wiedergegebenen Bild erfolgen muss und die OFE erst in die Fahrumgebung eingeordnet werden muss. Auch werden durch die Einblendung der OFE auf der Anzeigeeinheit evtl. fahrsicherheitsrelevante Informationen verdeckt.

Das genaue Gegenteil der vorstehend beschriebenen Darstellungsform auf einem Display ist das sog. Head-up-Display, welches diverse Informationen direkt auf die Innenseite der Windschutzscheibe ins Sichtfeld des Kfz-Fahrers projiziert. Allerdings kann bei einer Einblendung von Informationen in die Innenseite der Windschutzscheibe ebenfalls eine Irritation des Fahrers oder gar ein "Verdecken" von sicherheitsrelevanten Informationen auf der Straße erfolgen, was sich nachteilig auf die Fahrsicherheit auswirkt.

Aus der Druckschrift DE 10 2006 01 0478 A1 ist ein Verfahren und eine Anordnung zur Anzeige von Navigationshinweisen bekannt. Dazu wird ein Ausschnitt aus der Fahrumgebung von einer Kamera aufgenommen und auf eine Anzeigeeinheit zusammen mit einem Navigationshinweis angezeigt. Bei einer Bewegung des Fahrzeuges wird die Position des mindestens einen Navigationshinweises, innerhalb der Umgebungsbildfolge in Abhängigkeit von der relativen zum Fahrzeug erfolgenden Bewegung der Umgebung, verändert. Die Anzeige des Navigationshinweises kann insbesondere so erfolgen, dass diese vom Benutzer wie reale Verkehrszeichen bzw. wie auf der Fahrbahn angebrachte Richtungspfeile wahrgenommen werden können.

Aus der Druckschrift US 6,285,317 B1 ist ein Navigationssystem zur Anzeige von Hinweissymbolen für eine optische Fahrempfehlung auf einem Abbild einer realen Fahrzeugumgebung in Fahrtrichtung des Fahrzeugs. Ein Kalibrieren der Kamera kann abhängig von dem Aufnahmewinkel der Kamera durchgeführt werden.

Aus der Druckschrift WO 2007/037126 A1 ist eine Navigationseinrichtung bekannt, bei der ein Hinweissymbol für eine Fahrbahnabzweigung abhängig von dem Abstand zu der Abzweigung angezeigt wird.

Die Druckschrift WO 2006/132522 A1 beschreibt ein Navigationsgerät zum Anzeigen von Hinweissymbolen auf einer Anzeigevorrichtung. Das Navigationsgerät ist mit einer Kamera versehen, um ein Abbild einer realen Fahrzeugumgebung in einer Fahrtrichtung des Fahrzeugs aufzuzeichnen. Das Navigationsgerät ist ausgebildet, um eine Kombination des Abbilds der realen Fahrzeugumgebung und der Hinweissymbole auf der Anzeigevorrichtung zu realisieren. Zum Korrigieren der perspektivischen Ansicht des Hinweissymbols auf dem Abbild der realen Fahrzeugumgebung sind Pfeiltasten vorgesehen, um das Hinweissymbol auf dem Abbild der realen Fahrzeugumgebung hinsichtlich seiner Position und perspektivischen Darstellung zu korrigieren.

### Offenbarung der Erfindung

Die Aufgabe der vorliegenden Erfindung besteht somit darin, eine bessere Möglichkeit zur Ausgabe von Fahrempfehlungen zu schaffen.

Die Aufgabe wird durch ein Verfahren zur Ausgabe von optischen Fahrempfehlungen in einem Fahrzeug gemäß den Schritten nach Anspruch 1 sowie durch eine Vorrichtung zur Ausgabe von optischen Fahrempfehlungen in einem Fahrzeug gemäß den Merkmalen nach Anspruch 6 und durch ein Kraftfahrzeug gemäß den Merkmalen nach Anspruch 7 gelöst. Weitere Ausgestaltungen der Erfindung sind Gegenstand der abhängigen Ansprüche.

Die vorliegende Erfindung schafft ein Verfahren zur Ausgabe von optischen Fahrempfehlungen in einem Fahrzeug auf der Basis einer vorgegebenen Fahrtroute, wobei das Verfahren durch die folgenden Schritte gekennzeichnet ist:
- Aufnehmen eines Abbildes einer realen Fahrzeugumgebung in eine Fahrtrichtung des Fahrzeugs;
- Erfassen des aktuellen geographischen Standortes des Fahrzeugs;
- Bestimmen (54) eines Hinweissymbols (36) abhängig von der vorgegebenen Fahrtroute und von dem erfassten geographischen Standort;
- Perspektivisches Korrigieren des bestimmten Hinweissymbols, um eine Ansicht des Hinweissymbols zu erreichen, die einer Ansicht einer Fahrbahnmarkierung auf einem Fahrweg in einem Display entspricht; und
- Kombinieren des aufgenommenen Abbildes mit dem perspektivisch korrigierten Hinweissymbol sowie Anzeigen des kombinierten Abbildes auf einem Display.

Die vorliegende Erfindung basiert auf der Erkenntnis, dass durch eine einfache Kombination des erfassten aktuellen geographischen Standorts des Fahrzeugs mit einer vorgegebenen Fahrtroute ein Hinweissymbol für eine optische Fahrempfehlung erzeugt werden kann, welches nachfolgend perspektivisch korrigiert wird. Dieses perspektivisch korrigierte Hinweissymbol gleicht dann einer Fahrbahnmarkierung, wie sie beispielsweise durch die Richtungspfeile auf Abbiegespuren zu finden sind. Eine solche perspektivisch korrigierte Version des Hinweissymbols wird dann mit dem aufgenommenen Abbild der realen Fahrzeugumgebung kombiniert und dem Fahrer als optische Fahrempfehlung ausgegeben.

Ein derartiger Ansatz bietet den Vorteil, dass durch die perspektivische Korrektur des Hinweissymbols und der folgenden Einblendung des korrigierten Hinweissymbols in das aufgenommene Abbild für den Fahrer ein leicht zu erfassendes Umgebungsszenario auf dem Display angezeigt wird. Besonders interessant ist dieser Vorteil bei kleinen Anzeigedisplays, auf denen sich ein Fahrer auch durch einen nur flüchtigen Blick schnell orientieren können muss. Das Hinweissymbol sticht im erfindungsgemäßen Ansatz nicht zu stark aus der Umgebung hervor und vermeidet so Irritationen beim Fahrer. Andererseits sind aber auch keine komplexen Bildverarbeitungs- bzw. Bildvergleichsalgorithmen des Abbildes mit einer Darstellung in einer digitalen Straßenkarte notwendig. Dies senkt die Herstellungs- und Betriebskosten beim Einsatz des erfindungsgemäßen Ansatzes. Auch lassen sich Bildoptimierungsfunktionen wie beispielsweise eine Restlichtverstärkung problemlos in den erfindungsgemäßen Ansatz einbetten, da das Hinweissymbol von dem in der Kamera aufgenommenen Abbild isoliert generiert wird und eine Kombination des (perspektivisch korrigierten) Hinweissymbols mit dem (eventuell optimierten) Abbild der Fahrzeugumgebung erst kurz vor der Anzeige an den Fahrer erfolgt.

Günstig ist es auch, wenn vor dem Schritt des perspektivischen Korrigierens ein Schritt des Kalibrierens des Aufnahmewinkels der Kamera durchgeführt wird, um einen Kalibrierungsparameter zu ermitteln und wobei beim Schritt des perspektivischen Korrigierens eine Korrektur auf der Basis des ermittelten Kalibrierungsparameters erfolgt. Dies bietet den Vorteil, dass je nach Aufnahmewinkel der Kamera eine unterschiedliche perspektivische Anpassung des korrigierten Hinweissymbols möglich ist. Wird beispielsweise eine Fahrzeugkamera verwendet, die in Höhe des Rückspiegels angebracht ist, ist eine andere perspektivische "Korrektur" des Hinweissymbols durchzuführen, als wenn die Fahrzeugkamera im Bereich des Kühlergrills befestigt ist. Ebenfalls ist bei einem "schiefen" Einbau der Kamera vor der Inbetriebnahme der Grad des "schiefen" Einbaus zu ermitteln, um im Betrieb eine Verdrehung des Hinweissymbols um die Normale des Abbildes als "Korrektur" durchführen zu können.

Weiterhin kann auch der Schritt des Kalibrierens nach dem Schritt des Erfassens des aktuellen geographischen Standortes des Fahrzeugs erfolgen und eine perspektivische Darstellung des geographischen Standortes aus Daten der digitalen Straßenkarte umfassen. Diese wird dann mit dem aufgenommenen Abbild überlagert und auf dem Display angezeigt. Hierbei erfolgt eine Ermittlung des Kalibrierungsparameters durch eine Veränderung der perspektivischen Darstellung aus Daten der digitalen Straßenkarte in Bezug zum aufgenommenen Abbild. Durch eine derartige Ausführungsform kann die perspektivische Darstellung des Hinweissymbols dadurch angepasst werden, dass beispielsweise in dem Abbild der Fahrzeugumgebung reale Straßenkanten mit virtuellen Straßenkarten aus den Daten der digitalen Straßenkarte in Übereinstimmung gebracht werden. Dies ermöglicht, dass der Kalibrierungsparameter derart eingestellt wird, so dass auch das Hinweissymbol (beispielsweise ein eingeblendeter Richtungspfeil) parallel zu den Straßenkanten ausgerichtet werden kann. Dabei kann der Kalibrierungsparameter zugleich auch derart eingestellt werden, dass das Hinweissymbol perspektivisch korrekt "verzerrt" wird, um einer Fahrbahnmarkierung ähnlich zu erscheinen.

Ferner kann auch im Schritt des Kalibrierens eine Horizontlinie und das Hinweissymbol auf dem Display angezeigt und mit dem aufgenommenen Abbild überlagert werden, wobei die Ermittlung des Kalibrierungsparameters derart erfolgt, dass die Horizontlinie auf einen Horizont des Kamerabildes verschoben wird oder das Hinweissymbol an einer aus dem Abbild erkennbaren Kante einer Fahrbahn oder Fahrspurmarkierung ausgerichtet wird. Dieses Kalibrierungsverfahren ist auch für einen Laien einfach und schnell durchzuführen und erfordert zudem keine komplexen Bildverarbeitungsalgorithmen oder Positionsbestimmungen. Zur Verbesserung der Genauigkeit des Kalibrierungsparameters kann aber auch eine Ausrichtung sowohl unter Verwendung der im vorstehenden Absatz genannten Standortbestimmung als auch mit einer Horizontlinie erfolgen.

Ferner kann auch in einer anderen Ausführungsform der Schritt des Kalibrierens eine Einstellung des Kalibrierungsparameters umfassen, der derart ausgelegt ist, dass bei dem Schritt des perspektivischen Korrigierens eine Verdrehung des Abbildes auf dem Display um die Normale des Abbildes oder eine Verdrehung des Hinweissymbols um die Normale des Abbildes bewirkt. Dies ist insbesondere zum Ausgleich einer "schiefen" Montage der Kamera in dem Fahrzeug günstig, da hierdurch eine Irritation des Fahrers durch das "schiefe Bild" beim flüchtigen Blick auf die Anzeigeeinheit vermieden werden kann.

Auch kann vor dem Schritt des Kombinierens eine Restlichtverstärkung des aufgenommenen Abbildes durchgeführt oder das aufgenommene Abbild optimiert werden. Hierdurch kann eine Verbesserung der Sicht des Fahrers und damit eine höhere Fahrsicherheit bei Dunkelheit erreicht werden, ohne die Funktion der Einblendung der optischen Fahrempfehlung zu beeinträchtigen.

Erfindungsgemäß kann auch ein Computerprogramm mit Programmcode zur Durchführung des Verfahrens nach einer der vorstehenden Ausführungsformen vorgesehen sein, wobei das Verfahren dann durchgeführt wird, wenn das Computerprogramm auf einem Computer ausgeführt wird. Auch können nur einzelne Schritte des beschriebenen Gesamtverfahrens auf einem Rechner oder Computer durchgeführt werden, die sich sehr effizient in einem Computer implementieren lassen (wie beispielsweise der Schritt des perspektivischen Korrigierens des Hinweissymbols).

Gemäß einer anderen Ausführungsform der vorliegenden Erfindung ist eine Vorrichtung zur Ausgabe von optischen Fahrempfehlungen in einem Fahrzeug auf der Basis einer vorgegebenen Fahrtroute vorgesehen, die durch die folgenden Merkmale gekennzeichnet ist:
- einer Kamera, die ausgebildet ist, um ein Abbild einer Fahrzeugumgebung in eine Fahrtrichtung des Fahrzeugs aufzunehmen;
- einer Ortungseinheit, die ausgebildet ist, um den aktuellen geographischen Standort des Fahrzeugs zu erfassen;
- einem Hinweissymbolgenerator, der ausgebildet ist, um ein Hinweissymbol (36) abhängig von der vorgegebenen Fahrtroute und von dem erfasstengeographischen Standort zu bestimmen;
- einer Korrektureinheit, die ausgebildet ist, um ein perspektivisches Korrigieren des bestimmten Hinweissymbols durchzuführen, um eine Ansicht des Hinweissymbols zu erreichen, die einer Ansicht einer Fahrbahnmarkierung auf einem Fahrweg in einem Display entspricht; und
- einem Display, das ausgebildet ist, um das aufgenommene Abbild mit dem perspektivisch korrigierten Hinweissymbol zu kombinieren und das kombinierte Abbild auszugeben.

In einer besonderen Ausführungsform kann die vorstehend genannte Vorrichtung eine Größe und/oder ein Gewicht aufweisen, sodass sie von einer Person getragen werden kann und mobil einsetzbar ist. Eine solche Größe und ein solches Gewicht entspricht zum Beispiel der Größe und dem Gewicht eines gewöhnlichen PDAs (d.h. etwa 10 x 7 cm Größe und 150 gr Gewicht). Dies bietet den Vorteil, dass die Vorrichtung einfach zu transportieren und auch in fremden Fahrzeugen eingesetzt werden kann. Ein effektiver Diebstahlschutz durch die Demontage und Entfernung der Vorrichtung bei Verlassen des Fahrzeugs ist hierdurch gegeben. Ebenfalls wird der Einsatzwert einer solchen Vorrichtung erhöht, da sie nicht an ein spezielles Fahrzeug gebunden ist.

Auch kann in einer anderen Ausführungsform der vorliegenden Erfindung ein Kraftfahrzeug die vorstehend genannte Vorrichtung aufweisen, wobei die Kamera eine in einem Kraftfahrzeug fest installierte Fahrzeugkamera ist. Dies bietet eine Möglichkeit der Einbindung einer evtl. bereits vorhandenen Kamera des entsprechenden Kraftfahrzeugs in den erfindungsgemäßen Ansatz. Dies wirkt sich Kosten sparend durch die Mehrfachverwendung von bestehenden Einheiten aus.

### Kurze Beschreibung der Zeichnungen

Die Erfindung wird nachstehend anhand der beigefügten Zeichnungen beispielhaft näher erläutert. Es zeigen:
- Fig. 1A: ein Blockschaltbild einer Vorrichtung gemäß einer Ausführungsform der Erfindung;
- Fig. 1 B: ein Beispiel für ein im Display ausgegebenes Abbild mit eingeblendeter optischer Fahrempfehlung; und
- Fig. 2: ein Ablaufdiagramm eines Verfahrens gemäß einer Ausführungsform der Erfindung.

### Ausführungsformen der Erfindung

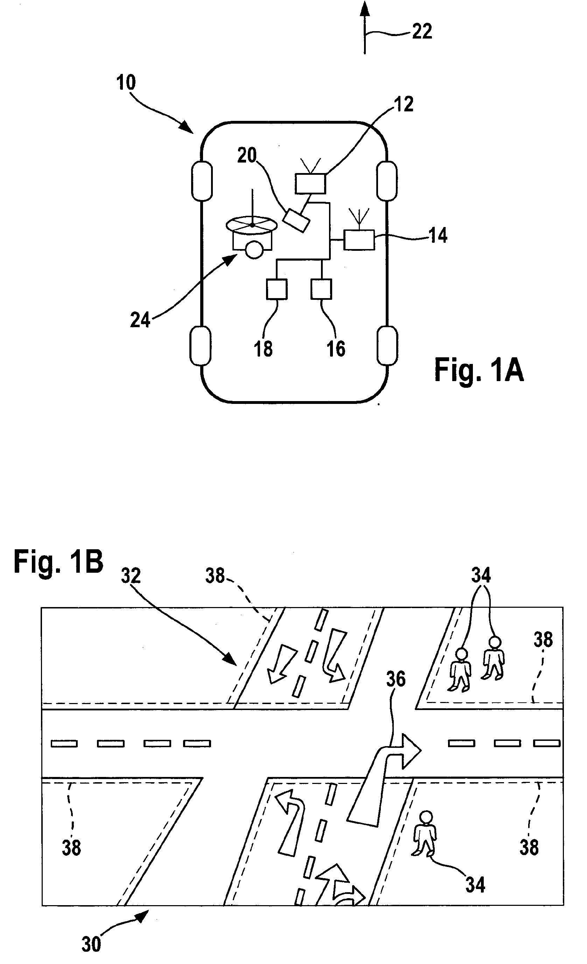

Fig. 1A zeigt ein Blockschaltbild eines Ausführungsbeispiels der vorliegenden Erfindung. Hierbei sind in einem Fahrzeug 10, eine Kamera 12, eine Ortungseinheit 14, ein Hinweissymbolgenerator 16, eine Korrektureinheit 18 sowie ein Display 20 vorgesehen, die miteinander verbunden sind. Mit der Kamera 12 wird ein Abbild der Fahrzeugumgebung in eine Fahrtrichtung 22 des Fahrzeugs 10 aufgenommen. Mit der Ortungseinheit 14 wird nach der Aufnahme des Abbildes (oder parallel dazu) die aktuelle geographische Position des Fahrzeugs 10 bestimmt. Dies kann beispielsweise durch eine GPS-Positionsbestimmung erfolgen. Anhand einer digitalen Straßenkarte sowie der bestimmten geographischen Position des Fahrzeugs 10 und einer zuvor eingegebenen gewünschten Fahrtroute, kann im Hinweissymbolgenerator 16 ein Hinweissymbol erzeugt werden. Mit diesem kann einem Fahrer 24 des Fahrzeugs 10 ein (optischer) Hinweis auf eine etwa zu wählende Abzweigung gegeben werden. Dieses Hinweissymbol kann insbesondere in einer Pfeildarstellung bestehen. Hierauf folgend wird in einer Korrektureinheit 18 eine perspektivische Korrektur des Hinweissymbols durchgeführt. Diese Korrektur erfolgt mit dem Ziel, das Hinweissymbol derart perspektivisch zu "verzerren", dass es wie eine Markierung auf der Fahrbahn aussieht. Über das Display 20 wird nun das von der Kamera 12 aufgenommene Abbild wiedergegeben, wobei das perspektivisch korrigierte (d.h. "verzerrte") Hinweissymbol eingeblendet wird.

Fig. 1B zeigt ein Beispiel einer Darstellung 30, wie sie auf dem Display 20 erscheinen könnte. Neben einer Kreuzung 32, die auch in digitalen Straßenkarten dargestellt werden könnte, zeigt die Darstellung 30 ein reales Fahrzeugumgebungsszenario, bei dem auch Fußgänger 34 durch die Kamera 12 erfasst und in dem Display 20 wiedergegeben werden. Die Darstellung des perspektivisch korrigierten Hinweissymbols 36 erfolgt dabei in der Form einer Fahrbahnmarkierung, die eine Fahrempfehlung für den Fahrer entsprechend der gewünschten Fahrtroute wiedergibt.

Gegenüber den bekannten Ansätzen zur Einblendung von Fahrempfehlungen bietet der erfindungsgemäße Ansatz mehrere Vorteile. Zunächst vermeidet die perspektivische "Verzerrung" bzw. Korrektur des Hinweissymbols eine große Irritation des Fahrers bei einem kurzen Blick auf das Display 20 durch einen überdimensionalen Pfeil (wie es herkömmlich erfolgt). Weiterhin können durch die reale Wiedergabe des Fahrzeugumgebungsszenarios auf dem Display 20 auch sicherheitsrelevante Aspekte wie das Auftauchen der Fußgänger 34 berücksichtigt werden. Eventuell lassen sich auch bewegte Objekte (wie die in Fig. 1B dargestellten Fußgänger 34) farbig markieren, um dem Fahrer einen besonderen Hinweis auf diese Objekte zu geben. Zugleich wird auch vermieden, dass komplizierte Bilderkennungsalgorithmen eingesetzt werden müssen, so dass weder komplizierte Schaltungsstrukturen zu realisieren sind als auch eine hohe Leistungsaufnahme einer solchen Vorrichtung zu befürchten ist. Der erfindungsgemäße Ansatz lässt sich somit sowohl im mobilen Navigationssystem als auch in Fahrzeugen fest verbaut umsetzen.

Um eine gewünschte Ansicht des eingeblendeten perspektivisch korrigierten Hinweissymbols 36 sicherzustellen, sollte eine Kalibrierung des Navigationssystems vor dessen Einsatz erfolgen. Diese Kalibrierung kann auf mehrere Weisen durchgeführt werden. Gemäß einer ersten Kalibrierungsart kann dabei die aktuelle geographische Position des Fahrzeugs 10 bestimmt werden und an Hand der bestimmten Position in einer abgespeicherten digitalen Straßenkarte der Straßenverlauf bestimmt werden. Besonders günstig ist eine Kalibrierung an einer Straßenkreuzung bei der mehrere Kanten im bestimmten "virtuellen" Straßenverlauf zur Durchführung der Kalibrierung verfügbar sind. In Fig. 1B ist der bestimmte "virtuelle" Straßenverlauf38 durch die gestrichelt dargestellte Linie 38 wiedergegeben. Wird dieser bestimmte "virtuelle" Straßenverlauf 38 mit dem von der Kamera 12 aufgenommenen Abbild der Fahrzeugumgebung überlagert, kann die Kalibrierung durch ein "Verschieben" oder "Verdrehen" des "virtuellen" Straßenverlaufs 38 gegenüber dem aufgenommen ein Abbild (oder umgekehrt) erfolgen bis beide Ansichten deckungsgleich sind. Das "Verdrehen" kann dabei durch eine Rotation um die Bildnormale des auf dem Display 20 abgebildeten Bildes erfolgen, um einen in horizontaler Richtung "schiefen" Einbau der Kamera in das Fahrzeug zu kompensieren. Auch kann ein "Verkippen" derart erfolgen, dass der "virtuelle" Straßenverlauf perspektivisch nach vorne oder hinten gekippt wird, um die Einbauhöhe der Kamera im Fahrzeug oder einen "schiefen" Einbau der Kamera in vertikaler Richtung zu kompensieren. Praktisch kann ein solches "Verdrehen", "Verschieben" oder "Verkippen" durch den Einsatz von einem oder mehreren Bedienelementen ausgeführt werden (wie zum Beispiel einem Dreh-Drück-Regler). Diese können von einem Benutzer bedient werden und ermöglicht die Eingabe von Steuerinformationen für ein solches "Verdrehen", "Verschieben" oder "Verkippen" der einen Darstellung in Bezug zur zweiten Darstellung auf dem Display.

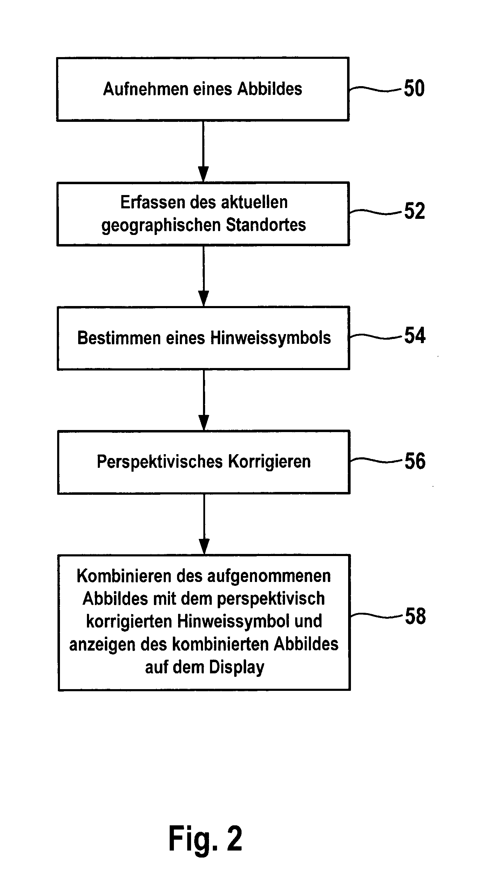

In Fig. 2 ist ein Ablaufdiagramm eines Ausführungsbeispiels der vorliegenden Erfindung dargestellt. Das in Fig. 2 dargestellte Ablaufdiagramm entspricht einem Verfahren, das in einer Vorrichtung entsprechend Fig. 1A ausgeführt werden kann. In einem ersten Schritt 50 erfolgt das Aufnehmen eines Abbildes unter Verwendung der Kamera. Hieran anschließend erfolgt das Erfassen 52 des aktuellen geographischen Standorts des Fahrzeugs unter Verwendung der Ortungseinheit. In einem hieran anschließenden Schritt erfolgt das Bestimmen 54 eines Hinweissymbols, um einem Fahrer des Fahrzeugs in Abhängigkeit von dem erfassten geographischen Standort eine Fahrempfehlung zur Einhaltung der Fahrtroute zu geben. Das bestimmte Hinweissymbol wird nachfolgend in einem Schritt des perspektivischen Korrigierens 56 "verzerrt", um eine Ansicht des Hinweissymbols zu erreichen, die einer Ansicht einer Fahrbahnmarkierung auf einem Fahrweg in einem Display entspricht. Auch kann beispielsweise aus einer digitalen Straßenkarte eine Steigung, ein Gefälle und/oder eine Kurvigkeit oder ähnliches der Fahrbahn berücksichtigt werden, so dass das perspektivisch korrigierte Hinweissymbol auch bei einem zuvor fest eingestelltem Kalibrierungsparameter der aktuellen Fahrumgebung angepasst wird und ein entsprechendes Aussehen aufweist. Die Informationen über die Steigung, das Gefälle etc. können gegebenenfalls auch durch eine Auswertung des von der Kamera aufgenommenen Abbildes erhalten werden. Schließlich erfolgen in einem letzten Schritt ein Kombinieren 58 des aufgenommenen Abbildes mit dem perspektivisch korrigierten Hinweissymbol und ein Anzeigen des kombinierten Abbildes auf dem Display.

Zusammenfassend ist anzumerken, dass die erfindungsgemäße Idee im Wesentlichen vorsieht, die Umgebung mittels einer Kamera zu erfassen und auf eine Anzeige zu bringen, die im Stand der Technik üblicherweise in diesem Fall zur Darstellung des virtuellen Bildes genutzt wird. Durch den vorgeschlagenen Ansatz wird diesem realen Bild der (Fahrzeug-) Umgebung eine optische Fahrempfehlung überlagert, die die Orientierung des Benutzers maßgeblich verbessert. Hierbei wird die Ausgabe der Fahrempfehlung nicht über komplizierte Bilderkennungsalgorithmen realisiert, um eine Anwendung auf Grund der geringeren Leistungsaufnahme sowohl in mobilen Navigationssystemen als auch in fest verbauten Versionen zu ermöglichen.

Eine für den Benutzer gut erfassbare Darstellung der OFE im realen Bild ist derart gestaltet, dass durch Überlagerung von realem Bild mit gezeichneter OFE ein Gesamtbild entsteht, welches den Eindruck erweckt, die OFE sei "auf der Straße" gezeichnet. D. h. es ist für die Qualität des Gesamtbildes von hoher Bedeutung, dass die OFE möglichst in Übereinstimmung mit der tatsächlichen Straßengeometrie gebracht wird.

Dies kann hier anhand der digitalen Straßenkarte geschehen, die als Basis zur Navigation und Ortung in jedem Navigationssystem vorliegt. Durch eine heute verfügbare (auf GPS oder Sensorkopplung basierende) hochpräzise Ortung ist nahezu jederzeit die Position des Systems bekannt und kann somit auch in die digitale Straßenkarte übertragen werden. Von hier aus können dann die OFE generiert werden, die exakt zur Geometrie der digitalen Karte passen. Es wird dabei speziell angenommen, dass diese digitale Straßenkarte eine derart hohe Güte hat, dass sie in nahezu allen Fällen mit der tatsächlichen Straßengeometrie übereinstimmt.

Das so erzeugte Objekt wird nun als Einzelobjekt, d. h. ohne Straßendaten, perspektivisch korrigiert und mit dem realen Umgebungsbild überlagert. Somit entsteht für den Betrachter der Eindruck, die OFE sei auf der Anzeige "auf die Straße" gezeichnet.

Zusätzlich ist dieses Verfahren unabhängig von den tatsächlichen Sichtverhältnissen, die unter Umständen eine auf Bilderkennung basierende Lösung stark einschränken könnte. Die Bilddaten können unabhängig von der OFE modifiziert/optimiert werden, beispielsweise durch Restlichtverstärkung.

Der Einbauort der Kamera kann sich am Fahrzeug aber auch am System selbst befinden. Damit ist ebenfalls eine mobile Anwendung ermöglicht.

Um die Grundlage für eine korrekte perspektivische Korrektur der OFE zu schaffen, sollte dem Benutzer die Möglichkeit gegeben werden, die Kameraposition zu kalibrieren. Hierzu sind mehrere Verfahren denkbar.

Beispielsweise ist es möglich, dass das System nach erfolgreicher Ortung im Kalibrierungsverfahren die digitale Straßenkarte perspektivisch dem Benutzer zur Anzeige bringt und dabei von dem Bild der Kamera überlagert wird. Diese kann dann anhand geeigneter Bedienelemente die Darstellung der Art perspektivisch verändern, dass sie möglichst genau mit dem Kamerabild zur Deckung kommt. Die so ermittelten Parameter können persistent abgespeichert werden und dienen im Gebrauch als Basis für die Berechnung der perspektivischen Darstellung der OFE.

Als weitere Möglichkeit zur Kalibrierung kommt in Betracht, dem Benutzer zwei Elemente zur Veränderung anzubieten; eine Linie für den Horizont und eine Richtungsanzeige. Diese werden ebenfalls dem Kamerabild überlagert und können durch geeignete Bedienelemente derart verändert werden, dass die "Horizontlinie" mit dem Horizont des Kamerabildes übereinstimmt, und die Richtungsanzeige mit der Ausrichtung des Fahrzeugs zu Straße übereinstimmt.

## Patentansprüche

1. Verfahren zur Ausgabe von optischen Fahrempfehlungen in einem Fahrzeug auf der Basis einer vorgegebenen Fahrtroute,
mit den folgenden Schritten:
- Aufnehmen (50) eines Abbildes einer realen Fahrzeugumgebung in eine Fahrtrichtung (22) des Fahrzeugs (10) mithilfe einer Kamera (12);
- Erfassen (52) des aktuellen geographischen Standortes des Fahrzeugs (10);
- Bestimmen (54) eines Hinweissymbols (36) für eine optische Fahrempfehlung abhängig von der vorgegebenen Fahrtroute und von dem erfassten geographischen Standort;
- Perspektivisches Korrigieren (56) des bestimmten Hinweissymbols (36), um eine Ansicht des Hinweissymbols (36) zu erreichen, dass es wie eine Markierung auf der Fahrbahn aussieht; und
- Kombinieren (58) des aufgenommenen Abbildes mit dem perspektivisch korrigierten Hinweissymbol (36) sowie Anzeigen des kombinierten Abbildes auf einem Display (20),
wobei vor dem Schritt des perspektivischen Korrigierens (56) ein Schritt des Kalibrierens des Aufnahmewinkels der Kamera (12) mit Hilfe eines Bedienelements durchgeführt wird, um einen Kalibrierungsparameter zu ermitteln, um je nach Aufnahmewinkel der Kamera (12) eine unterschiedliche perspektivische Anpassung des korrigierten Hinweissymbols zu ermöglichen, wobei beim Schritt des perspektivischen Korrigierens (56) eine Korrektur auf der Basis des ermittelten Kalibrierungsparameters erfolgt, und wobei
der Schritt des Kalibrierens nach dem Schritt des Erfassens (52) des aktuellen geographischen Standortes des Fahrzeugs (10) durchgeführt wird; **dadurch gekennzeichnet, dass** der Schritt des Kalibrierens eine perspektivische Darstellung des geographischen Standortes aus Daten einer digitalen Straßenkarte umfasst, die mit dem aufgenommenen Abbild überlagert und auf dem Display (20) angezeigt wird;
und dass die Ermittlung des Kalibrierungsparameters durch eine Veränderung der perspektivischen Darstellung aus Daten der digitalen Straßenkarte in Bezug zum aufgenommenen Abbild erfolgt.

2. Verfahren gemäß Anspruch 1, **dadurch gekennzeichnet, dass** im Schritt des Kalibrierens eine Horizontlinie und das Hinweissymbol (36) auf dem Display (20) angezeigt und mit dem aufgenommenen Abbild überlagert werden, wobei die Ermittlung des Kalibrierungsparameters derart erfolgt, dass die Horizontlinie auf einen Horizont des Abbildes verschoben wird oder das Hinweissymbol an einer aus dem Abbild erkennbaren Kante einer Fahrbahn oder Fahrspurmarkierung ausgerichtet wird.

3. Verfahren gemäß Anspruch 2, **dadurch gekennzeichnet, dass** bei dem Schritt des perspektivischen Korrigierens (56) eine Verdrehung des Abbildes auf dem Display (20) um die Normale des Abbildes oder eine Verdrehung des Hinweissymbols (36) um die Normale des Abbildes durchgeführt wird.

4. Verfahren gemäß einem der Ansprüche 1 bis 3, **dadurch gekennzeichnet, dass** vor dem Schritt des Kombinierens (58) eine Restlichtverstärkung des aufgenommenen Abbildes durchgeführt wird.

5. Computerprogramm mit Programmcode zur Durchführung des Verfahrens nach einem der vorhergehenden Patentansprüche, wenn das Computerprogramm auf einem Computer ausgeführt wird.

6. Vorrichtung zur Ausgabe von optischen Fahrempfehlungen in einem Fahrzeug auf der Basis einer vorgegebenen Fahrtroute
mit den folgenden Merkmalen:
- einer Kamera (12), die ausgebildet ist, um ein Abbild einer Fahrzeugumgebung in eine Fahrtrichtung (22) des Fahrzeugs (10) aufzunehmen;
- einer Ortungseinheit (14), die ausgebildet ist, um den aktuellen geographischen Standort des Fahrzeugs (10) zu erfassen;
- einem Hinweissymbolgenerator (16), der ausgebildet ist, um ein Hinweissymbol (36) für eine optische Fahrempfehlung abhängig von der vorgegebenen Fahrtroute und von dem erfassten geographischen Standort zu bestimmen;
- einer Korrektureinheit (18), die ausgebildet ist, um ein perspektivisches Korrigieren (56) des bestimmten Hinweissymbols (36) durchzuführen, um eine Ansicht des Hinweissymbols (36) zu erreichen, dass es wie eine Markierung auf der Fahrbahn aussieht, wobei der Kalibrierungsparameter dazu dient, je nach Aufnahmewinkel der Kamera eine unterschiedliche perspektivische Anpassung des Korrigierten Hinweissymbols zu ermöglichen; und
- einem Display (20), das ausgebildet ist, um das aufgenommene Abbild mit dem perspektivisch korrigierten Hinweissymbol (36) zu kombinieren und das kombinierte Abbild (30) auszugeben;
wobei die Vorrichtung weiterhin ausgebildet ist,
um ein Kalibrieren des Aufnahmewinkels der Kamera (12) mit Hilfe eines Bedienelements durchzuführen, um den Kalibrierungsparameter zu ermitteln;
**dadurch gekennzeichnet, dass** das Display (20) ausgebildet ist, um eine perspektivische Darstellung des geographischen Standortes aus Daten einer digitalen Straßenkarte mit dem aufgenommenen Abbild zu überlagern und anzuzeigen; und dass
die Vorrichtung ausgebildet ist, um die Ermittlung des Kalibrierungsparameters durch eine Veränderung der perspektivischen Darstellung aus Daten der digitalen Straßenkarte in Bezug zum aufgenommenen Abbild durchzuführen.

7. Kraftfahrzeug mit einer Vorrichtung gemäß Anspruch 6, wobei die Kamera (12) eine in einem Kraftfahrzeug (10) fest installierte Fahrzeugkamera ist.

## Claims

1. Method for outputting visual driving recommendations in a vehicle on the basis of a predefined route,
having the following steps:
- recording (50) an image of real vehicle surroundings in a direction of travel (22) of the vehicle (10) by means of a camera (12);
- registering (52) of the current geographic location of the vehicle (10);
- determining (54) an indication symbol (36) for a visual driving recommendation as a function of the predefined route and of the detected geographic location;
- perspective correction (56) of the specific indication symbol (36) in order to obtain a view of the indication symbol (36) such that it looks like a marking on the carriageway; and
- combination (58) of the recorded image with the perspectively corrected indication symbol (36) and displaying the combined image on a display (20),
wherein, before the step of perspective correction (56), a step of calibrating the recording angle of the camera (12) is carried out by means of an operator control in order to determine a calibration parameter, in order to permit different perspective adaptation of the corrected indication symbol depending on the recording angle of the camera (12), wherein during the step of perspective correction (56) correction is carried out on the basis of the determined calibration parameter, and wherein
the calibration step is carried out after the step of detecting (52) the current geographic location of the vehicle (10), **characterized in that** the calibration step comprises perspective representation of the geographic location on the basis of data of a digital road map, which representation has the recorded image superimposed on it and is displayed on the display (20), and **in that** the determination of the calibration parameter is carried out by changing the perspective representation on the basis of data of the digital road map with respect to the recorded image.

2. Method according to Claim 1, **characterized in that**, in the calibration step, a horizontal line and the indication symbol (36) are displayed on the display (20) and have the recorded image superimposed on them, wherein the determination of the calibration parameter is carried out in such a way that the horizontal line is shifted to a horizon of the image or the indication symbol is aligned with an edge of a carriageway or lane marking which can be detected on the basis of the image.

3. Method according to Claim 2, **characterized in that**, in the step of perspective correction (56), the image is rotated on the display (20) about the normal line of the image, or the indication symbol (36) is rotated about the normal line of the image.

4. Method according to one of Claims 1 to 3, **characterized in that** before the combination step (58) a residual light amplification of the recorded image is carried out.

5. Computer program having a program code for carrying out the method according to one of the preceding patent claims, when the computer program is carried out on a computer.

6. Device for outputting visual driving recommendations in a vehicle on the basis of a predefined route,
having the following features:
- a camera (12) which is designed to record an image of vehicle surroundings in a direction of travel (22) of the vehicle (10);
- a locating unit (14) which is designed to detect the current geographic location of the vehicle (10) ;
- an indication symbol generator (16) which is designed to determine an indication symbol (36) for a visual driving recommendation as a function of the predefined route and of the detected geographic location;
- a correction unit (18) which is designed to carry out perspective correction (56) of the specific indication symbol (36) in order to obtain a view of the indication symbol (36) such that it looks like a mark on the carriageway, wherein the calibration parameter serves to permit different perspective adaptation of the corrected indication symbol depending on the recording angle of the camera;
and
- a display (20) which is designed to combine the recorded image with the perspectively corrected indication symbol (36) and to output the combined image (30);
wherein the device is also designed to carry out calibration of the recording angle of the camera (12) by means of an operator control, in order to determine the calibration parameter; **characterized in that** the display (20) is designed to superimpose the recorded image on a perspective representation of the geographic location, on the basis of data of a digital road map, and to display said representation; and **in that** the device is designed to carry out the determination of the calibration parameter by changing the perspective representation on the basis of data of the digital road map with respect to the recorded image.

7. Motor vehicle having a device according to Claim 6, wherein the camera (12) is a vehicle camera which is permanently installed in a motor vehicle (10).

## Revendications

1. Procédé destiné à fournir des recommandations optiques de conduite dans un véhicule sur la base d'un itinéraire prédéterminé, comprenant les étapes suivantes :
- recevoir (50) une image d'un environnement réel du véhicule dans une direction de conduite (22) du véhicule (10) à l'aide d'une caméra (12) ;
- détecter (52) la position géographique instantanée du véhicule (10) ;
- déterminer (54) un symbole de référence (36) correspondant à une recommandation de conduite en fonction de l'itinéraire prédéterminé et de la position géographique détectée ;
- effectuer une correction de perspective (56) du symbole de référence déterminé (36) afin d'obtenir une vue du symbole de référence (36) de sorte qu'il est semblable à une balise présente sur la chaussée ; et
- combiner (58) l'image acquise au symbole de référence à perspective corrigée (36) et afficher l'image combinée sur un dispositif d'affichage (20),
dans lequel, avant l'étape de correction de perspective (56), une étape d'étalonnage de l'angle de prise de vue de la caméra (12) est effectuée au moyen d'un élément de commande afin de déterminer un paramètre d'étalonnage de manière à permettre une adaptation de perspective différente du symbole de référence corrigé en fonction de l'angle de prise de vue de la caméra (12), dans lequel, lors de l'étape de correction de perspective (56), une correction est effectuée sur la base du paramètre d'étalonnage déterminé, et dans lequel
l'étape d'étalonnage est effectuée après l'étape de détection (52) de la position géographique instantanée du véhicule (10) ; **caractérisé en ce que** l'étape d'étalonnage comprend une représentation en perspective de la position géographique à partir de données d'une carte routière numérique qui se superpose à l'image acquise et est affichée sur le dispositif d'affichage (20) ; et **en ce que** la détermination du paramètre d'étalonnage s'effectue par modification de la représentation en perspective à partir de données de la carte routière numérique par rapport à l'image acquise.

2. Procédé selon la revendication 1, **caractérisé en ce que**, lors de l'étape d'étalonnage, une ligne d'horizon et le symbole de référence (36) sont affichés sur le dispositif d'affichage (20) et sont superposés à l'image acquise, dans lequel la détermination du paramètre d'étalonnage s'effectue en déplaçant la ligne d'horizon vers un horizon de l'image ou en alignant le symbole de référence sur un bord reconnaissable dans l'image d'une route ou d'une balise de voie.

3. Procédé selon la revendication 2, **caractérisé en ce que**, lors de l'étape de correction de perspective (56), une rotation de l'image est effectuée sur le dispositif d'affichage (20) autour de la normale à l'image ou une rotation du symbole de référence (36) est effectuée autour de la normale à l'image.

4. Procédé selon l'une quelconque des revendications 1 à 3, **caractérisé en ce qu'**avant l'étape de combinaison (58), une amplification de lumière résiduelle de l'image acquise est effectuée.

5. Programme informatique comprenant un code de programme destiné à mettre en oeuvre le procédé selon l'une quelconque des revendications précédentes lorsque le programme informatique est exécuté sur un ordinateur.

6. Dispositif destiné à fournir des recommandations de conduite optiques dans un véhicule sur la base d'un itinéraire prédéterminé, comprenant les caractéristiques suivantes :
- une caméra (12) qui est conçue pour acquérir une image d'un environnement du véhicule dans une direction de conduite (22) du véhicule (10) ;
- une unité de positionnement (14) qui est conçue pour détecter la position géographique instantanée du véhicule (10) ;
- un générateur de symbole de référence (16) qui est conçu pour déterminer un symbole de référence (36) destiné à une recommandation de conduite optique en fonction de l'itinéraire prédéterminé et de la position géographique détectée ;
- une unité de correction (18) qui est conçue pour effectuer une correction de perspective (56) du symbole de référence déterminé (36) afin d'obtenir une vue du symbole de référence (36) de sorte qu'il est semblable à une balise présente sur la voie ;
dans lequel le paramètre d'étalonnage est destiné à permettre une adaptation de perspective différente du symbole de référence corrigé en fonction de l'angle de prise de vue de la caméra ; et
- un dispositif d'affichage (20) qui est conçu pour combiner l'image acquise au symbole de référence à perspective corrigée (36) et pour délivrer l'image combinée (30) ;
dans lequel le dispositif est en outre conçu pour effectuer un étalonnage de l'angle de prise de vue de la caméra (12) au moyen d'un élément de commande afin de déterminer le paramètre d'étalonnage ;
**caractérisé en ce que** le dispositif d'affichage (20) est conçu pour superposer une représentation en perspective de la position géographique à partir de données d'une carte routière numérique à l'image acquise et pour l'afficher ; et **en ce que** le dispositif est conçu pour effectuer la détermination du paramètre d'étalonnage par modification de la représentation en perspective à partir de données de la carte numérique par rapport à l'image acquise.

7. Véhicule automobile comportant un dispositif selon la revendication 6, dans lequel la caméra (12) est une caméra de véhicule installée de manière fixe dans un véhicule automobile (10).
